# EUROPÄISCHE PATENTANMELDUNG

(11) **EP 0 897 851 A2**
(43) Veröffentlichungstag der Anmeldung: **24.02.1999**
(21) Anmeldenummer: 98114592.3
(22) Anmeldetag: 04.08.1998
(51) Int. Cl.: B62D 1/19, B62D 33/073, B60R 21/09

(54) **Verformbare Fahrerkabine für Nutzfahrzeuge**

(30) Priorität: 20.08.1997 DE 19736136
(71) Anmelder: DAIMLER-BENZ AKTIENGESELLSCHAFT, 70567 Stuttgart (DE)
(72) Erfinder: Drevs, Klaus, 15825 Dahlewitz (DE); Wendt, Hartmut, 71067 Sindelfingen (DE)

(57) **Zusammenfassung**

Die Erfindung betrifft ein Nutzfahrzeug mit einer Fahrerkabine, die wenigstens einen Fahrersitz sowie eine Lenkungseinheit, eine Kupplungsanordnung und eine Bremseinheit aufweist, die vor dem Fahrersitz angeordnet sind.

Erfindungsgemäß sind wenigstens die Lenkungs- und die Bremseinheit zu einem gemeinsamen Baumodul zusammengefaßt, das an einem steifen Brüstungsquerträger derart schwenkbeweglich gelagert ist, daß das Baumodul bei einem Frontalaufprall in Fahrtrichtung nach vorne von dem Fahrersitz wegschwenkt.

Verwendung für Lastkraftwagen.

## Beschreibung

Die Erfindung betrifft ein Nutzfahrzeug mit einer Fahrerkabine, die wenigstens einen Fahrersitz sowie eine Lenkungseinheit, eine Kupplungsanordnung und eine Bremseinheit aufweist, die vor dem Fahrersitz angeordnet sind.

Ein Nutzfahrzeug dieser Art ist aus der DE 28 09 664 A1 bekannt. Dort ist eine in Abhängigkeit von der Fahrzeugverzögerung und/oder -verformung automatisch, jedoch auch manuell verlagerbare Lenksäule vorgesehen. Im Falle eines Frontalaufpralls löst ein Abtastelement den Verstellvorgang der Lenksäule insbesondere dadurch aus, daß eine Arretierung entriegelt wird. Daraufhin erfolgt ein Verstellen der Lenksäule in eine definierte Sicherheitsposition mit Hilfe einer Stellfeder.

Ferner ist aus der DE 43 35 511 A1 eine Sicherheitsvorrichtung für ein Kraftfahrzeug, insbesondere einen Personenkraftwagen, bekannt, bei der über eine oder mehrere Schubstangen sowie eine Hebelmechanik eine getrennte und gegenläufige Verschwenkung von Lenkeinrichtung und Betriebspedalen des Kraftfahrzeuges stattfindet. Die Verschwenkung erfolgt dabei in Abhängigkeit von einer kollisionsbedingten Verschiebung des Kraftfahrzeugantriebsaggregates relativ zum Fahrzeuginsassenraum.

Aufgabe der Erfindung ist es, ein Nutzfahrzeug der eingangs genannten Art Zu schaffen, das bei Aufprallbelastungen eine erhöhte Sicherheit für den Fahrer bietet.

Diese Aufgabe wird erfindungsgemäß mit den Merkmalen des Anspruchs 1 gelöst. Erfindungsgemäß ist eine fertigungstechnisch vorteilhafte Zusammenfassung der Lenkungs- und der Bremseinheit eines Nutzfahrzeug zu einem gemeinsamen Baumodul vorgesehen, das einfach und kostengünstig an einem Brüstungsquerträger unterhalb der Windschutzscheibe des Nutzfahrzeuges zu befestigen ist. Dadurch, daß der Brüstungsquerträger mindestens in Richtung der Fahrzeuglängsachse besonders steif ausgeführt ist, ergibt sich im Fall eines Frontalaufpralls des Nutzfahrzeuges eine Verschwenkbarkeit des Baumoduls um eine Schwenkachse, die durch die linienförmig gestaltete Lagerung des Baumoduls an dem Brüstungsquerträger definiert ist. Dadurch, daß der Brüstungsquerträger einschließlich der Lagerung des Baumoduls direkt unterhalb der Windschutzscheibe vorgesehen ist, ergibt sich bei einem Frontalaufprall eine Verschwenkung des Baumoduls in Fahrtrichtung nach vorne und weg von dem Fahrersitz des erfindungsgemäßen Nutzfahrzeuges, wodurch Verletzungsgefahren für den Fahrer durch Elemente der Lenkungseinheit und/oder der Bremseinheit reduziert sind.

Durch eine vorteilhafte Weiterbildung der Erfindung mit den Merkmalen des Anspruchs 2 wird gewährleistet, daß ein den Fahrer-Airbag aufnehmendes Lenkrad der Lenkungseinheit zunächst in einer Position verbleibt, die eine wirkungsvolle Entfaltung des Airbags zum Fahrer hin ermöglicht.

Durch die Merkmale des Anspruchs 4 wird vermieden, daß die Pedalanordnung durch eine Aufstellung im Fußraum eine Verletzungsgefahr darstellt.

Weitere Vorteile und Merkmale der Erfindung ergeben sich aus den Unteransprüchen sowie aus der nachfolgenden Beschreibung, in der ein bevorzugtes Ausführungsbeispiel der Erfindung anhand der Zeichnungen dargestellt ist.
- Fig. 1: zeigt schematisch in einer Seitenansicht die Fahrerkabine eines erfindungsgemäßen Lastkraftwagens, wobei die Lage von Lenkungs- und Bremseinheit in der jeweils normalen Funktionsposition dargestellt ist, und
- Fig. 2: in einer Seitenansicht die Fahrerkabine nach Fig. 1, wobei Lenkungs- und Bremseinheit infolge eines Frontalaufpralls des Lastkraftwagens in eine Sicherheitsposition verschwenkt sind.

In den Figuren ist eine Fahrerkabine 1 eines Nutzfahrzeuges in Form eines Lastkraftwagens in Frontlenkerbauweise dargestellt. Die Fahrerkabine 1 weist einen steifen Brüstungsquerträger 2, der sich unterhalb der Frontscheibe 3 zwischen den A-Säulen der Fahrerkabine 1 über die gesamte Fahrzeugbreite erstreckt, eine Lenkungseinheit 4 und eine Bremseinheit 5 auf. Die Lenkungseinheit 4 ist zusammen mit der Bremseinheit 5 und nicht dargestellten Kupplungselementen zu einem montagefähigen Baumodul 6 zusammengefaßt, das zwischen dem Brüstungsquerträger 2 und einem Fahrersitz 12 in der Fahrerkabine 1 angeordnet ist. Dabei sind als Bestandteile der Lenkungseinheit insbesondere die Lenksäule samt Lagerung, Lenkspindel und Verstellung sowie als Bestandteile der Bremseinheit 5, ein Bremskraftverstärker einschließlich Hydraulikanschlüssen und Kraftübertragungselementen in das Baumodul 6 integriert. Das in den vorliegenden Figuren dargestellte Ausführungsbeispiel umfaßt auch die Einbeziehung einer Pedalanordnung 7 und eines Fahrer-Airbags 8 in das Baumodul.

Das Baumodul 6 ist über mehrere, in Fahrzeugquerrichtung auf einer Linie liegende, biegeweiche Anbindungen 9 an dem steifen Brüstungsquerträger 2 aufgehängt und über ein Befestigungselement 10 an einer im Fall eines Frontalaufpralls deformierbaren Stirnwand 11 der Frontstruktur des Nutzfahrzeuges befestigt. Das Baumodul 6 ist derart aufgebaut und in die Fahrerkabine 1 eingepaßt, daß die vertikale Positionsebene der Lenkungseinheit 4 näherungsweise in Richtung der Fahrzeuglängsachse, die vertikale Positionsebene des Bremskraftverstärkers hingegen um ca. 5° in Richtung der Fahrerseite zur Fahrzeuglängsachse ausgelenkt ist. Die exakte Positionierung der einzelnen Elemente innerhalb des Baumoduls 6 ist prinzipiell frei und in Abhängigkeit von ergonomischen Anforderungen vor und während einer Kollision wählbar. Aus ergonomischen Gründen ist ferner vorgesehen, die Pedalanordnung 7 im Fall einer Verschwenkung des Baumoduls 6, ggf. in Abhängigkeit vom Ausmaß der Verschwenkung, von diesem abzukoppeln.

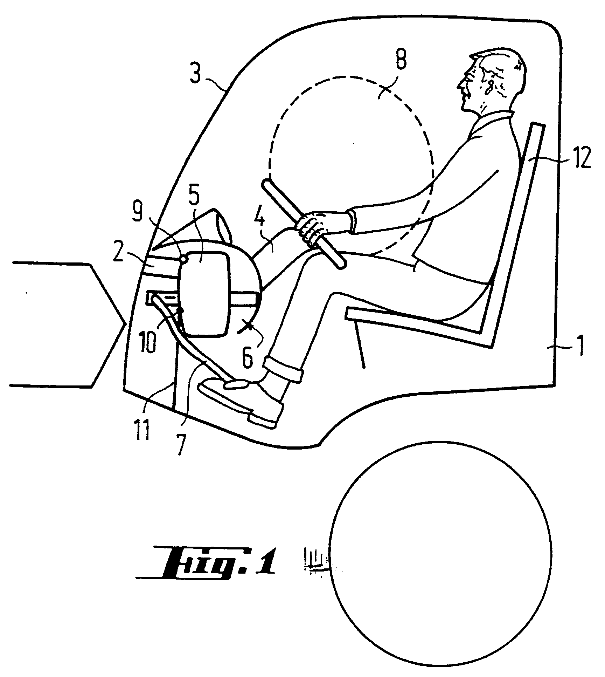

In Fig. 1 ist die Fahrerkabine 1 des erfindungsgemäßen Nutzfahrzeuges kurz vor einer Frontalkollision dargestellt, in der die Position eines in seine Wirkposition entfalteten Fahrer-Airbags 8 mit einer unterbrochenen Linie angedeutet ist. Diese Position nimmt der Airbag, ausgelöst durch eine übliche, nicht dargestellte Sensor- und Auslöseelektronik, sehr rasch nach einem Aufprall mit entsprechender negativer Beschleunigung für die Fahrerkabine und den Fahrer ein. Die Empfindlichkeit der genannten Sensor-/Auslöseelektronik definiert dabei den Auslösezeitpunkt, der so zu wählen ist, daß eine Auslösung während des Kollisionsvorganges noch vor einer wesentlichen Verformung der Stirnwand 11 erfolgt.

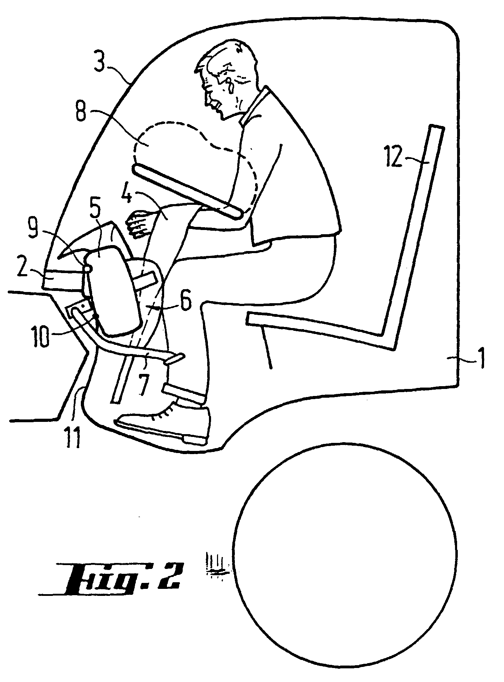

Wie in Fig. 2 gezeigt, führt die genannte plastische Verformung der Stirnwand 11 der Fahrerkabine 1 entsprechend der Aufprallenergie dazu, daß über das Befestigungselement 10 eine Kraft in das Baumodul 6 eingeleitet wird, die ein Verschwenken des Baumoduls um die auf der entsprechenden Schwenkachse gelegenen biegeweichen Anbindungen 9 erzwingt. Der steife Brüstungsquerträger 2 bewirkt dabei, daß die Schwenkachse näherungsweise erhalten bleibt, die Anbindungen 9 also auch während des Frontalaufpralls ihre Ausgangslage, insbesondere in Relation zueinander, weitgehend beibehalten. Das als Dämpfungs- bzw. Deformationselement auszuführende Befestigungselement 10 ermöglicht eine Energieabsorption und damit eine zumindest anfängliche Begrenzung der in das Baumodul eingeleiteten Kraft.

Auf diese Weise wird es ermöglicht, daß während des Kollisionsvorganges zunächst der Airbag 8 ausgelöst und in seine in Fig. 1 angedeutete Wirkposition entfaltet wird, in der er den Fahrer abfängt, und erst anschließend das Baumodul 6 um einen gewissen Winkel, der von der Verformung der Stirnwand abhängig ist, aus seiner normalen Funktionsposition heraus von dem Fahrersitz 12 weg verschwenkt wird. In dieser Situation, die in Fig. 2 dargestellt ist, verliert der Airbag 8 in üblicher Weise weitgehend seine Wirksamkeit, während das Baumodul 6 die Funktion, den Fahrer abzufangen, übernimmt.

Im Crashfall wird somit auf einfache Weise eine erhöhte Sicherheit für den Fahrer dadurch erreicht, daß mit nachlassender Wirkung des Fahrer-Airbags wesentliche Teile von Lenkungs- und Bremseinheit, die zu einem montagefähigen Baumodul zusammengefaßt sind, vom Fahrersitz weg verschwenkt werden.

## Patentansprüche

1. Nutzfahrzeug mit einer Fahrerkabine, die wenigstens einen Fahrersitz sowie eine Lenkungseinheit, eine Kupplungsanordnung und eine Bremseinheit ausweist, die vor dem Fahrersitz angeordnet sind,
**dadurch gekennzeichnet, daß**
wenigstens die Lenkungseinheit (4) und die Bremseinheit (5) zu einem gemeinsamen Baumodul (6) zusammengefaßt sind, das an einem steifen Brüstungsquerträger (2) derart schwenkbeweglich gelagert ist, daß das Baumodul bei einem Frontalaufprall in Fahrtrichtung nach vorne von dem Fahrersitz (12) wegschwenkt.

2. Nutzfahrzeug nach Anspruch 1,
**dadurch gekennzeichnet, daß**
das Baumodul (6) einer deformierbaren Stirnwand (11) einer Frontstruktur des Nutzfahrzeuges derart zugeordnet ist, daß die Verschwenkung des Baumoduls zeitlich verzögert zu der Entfaltung eines Fahrer-Airbags erfolgt.

3. Nutzfahrzeug nach einem der Ansprüche 1 oder 2,
**dadurch gekennzeichnet, daß**
die Lagerung des Baumoduls (6) an dem Brüstungsquerträger (2) durch eine biegeweiche Anbindung (9) des Baumoduls gestaltet ist.

4. Nutzfahrzeug nach wenigstens einem der Ansprüche 1, 2 oder 3,
**dadurch gekennzeichnet, daß**
eine in dem Fußraum der Fahrerkabine (1) befindliche Pedalanordnung (7) des Baumoduls (6) abhängig von der Verschwenkung des Baumoduls von diesem abkoppelbar ist.

5. Nutzfahrzeug nach wenigstens einem der Ansprüche 1 bis 4,
**dadurch gekennzeichnet, daß**
die Kupplungsanordnung zumindest teilweise in das Baumodul (6) integriert ist.

6. Nutzfahrzeug nach wenigstens einem der Ansprüche 1 bis 5,
**dadurch gekennzeichnet, daß**
ein Bremskraftverstärker der Bremseinheit (5) in einem Abstand unterhalb eines Lenkrades der Lenkungseinheit (4) und um einen spitzen Winkel geringfügig zu einer vertikalen, eine Drehachse des Lenkrades aufnehmenden Ebene schräggestellt ist.
